# EUROPÄISCHE PATENTSCHRIFT

(11) **EP 2 939 524 B1**
(45) Veröffentlichungstag und Bekanntmachung des Hinweises auf die Patenterteilung: **13.12.2017**
(21) Anmeldenummer: 15159554.3
(22) Anmeldetag: 18.03.2015
(51) Int. Cl.: A01F 15/10

(54) **ERNTEMASCHINE**
HARVESTER
MOISSONNEUSE

(30) Priorität: 29.04.2014 DE 102014006179
(43) Veröffentlichungstag der Anmeldung: 04.11.2015
(73) Patentinhaber: PÖTTINGER Landtechnik GmbH, 4710 Grieskirchen (AT)
(72) Erfinder: Aumayr, Klaus, 4612 Scharten (AT); Dopplmair, Norbert, 4707 Schlüßlberg (AT)
(74) Vertreter: Thoma, Michael

(56) Entgegenhaltungen:
- EP-A1- 0 807 380
- EP-A2- 2 687 083
- WO-A1-93/12643
- US-A1- 2005 198 935

## Beschreibung

Die vorliegende Erfindung betrifft eine Erntemaschine mit einem Förderrotor zum Fördern von Erntegut durch einen Förderkanal in eine Gutsammelkammer sowie einem Rückführkanal zum Rückführen von aus der Gutsammelkammer austretendem Erntegut zurück in den Förderkanal und/oder die Sammelkammer.

Eine solche Maschine kann insbesondere eine Ballenpresse sein, deren Gutsammelkammer als Ballenformkammer ausgebildet ist. Die Erntemaschine kann aber auch ein Ladewagen sein, bei dem in ähnlicher Weise vom Boden aufgenommenes Erntegut mittels eines Förderrotors durch einen Förderkanal hindurch in die Gutsammelkammer gefördert wird, aus der Erntegut unbeabsichtigt wieder austreten kann.

Bei Ballenpressen oder ähnlichen Erntemaschinen kann es dazu kommen, dass Erntegut unbeabsichtigterweise aus der Gutsammelkammer wieder austritt, was insbesondere im Bereich der Starterwalzen neben dem Einlass in die Ballenformkammer auftreten kann. Bei den an die umlaufenden Ballenform-Riemen im Mündungsbereich des Förderkanals bzw. an den Eintritt der Ballenkammer angrenzenden Starterwalzen ist regelmäßig ein Spalt hin zu den die Riemen umlenkenden Umlenkwalzen bzw. auch zwischen den Starterwalzen vorhanden, beispielsweise um das Wickelnetz in die Ballenkammer zuführen zu können. Durch solche Spalte, insbesondere auch in Verbindung mit der Förderwirkung der Starterwalzen, kann an sich bereits in die Gutsammeikammer gefördertes Erntegut unbeabsichtigt wieder aus der Gutsammelkammer austreten. Je nach Ausbildung der Erntemaschine kann dieses aus der Gutsammeikammer wieder austretende Erntegut einfach auf den Boden fallen oder von oben her wieder auf den Förderrotor bzw. den Förderkanal oder das diesem zugeordnete Schneidwerk fallen, insbesondere wenn der Förderrotor als Überkopfförderer ausgebildet ist und das vom Boden aufgenommene Erntegut über Kopf in die Gutsammelkammer fördert.

Um solche Erntegutverluste bzw. austretendes Erntegut wieder zurückzuführen, wurde bereits angedacht, hierfür einen Rückführkanal vorzusehen, der das aus der Gutsammelkammer austretende Erntegut sammelt und in den Förderkanal bzw. den Einlass der Gutsammelkammer rückspeist, vgl. US 2005/0198935 A1 und WO 93/12643 A1. Das Einspeisen des aus der Gutsammelkammer ausgetretenen Ernteguts in das zuströmende Frischgut, das vom Förderrotor durch den Förderkanal gefördert wird, ist jedoch nicht ganz einfach, da durch den im Förderkanal herrschenden Gutdruck das rückgespeiste Erntegut nur bedingt mitgenommen werden kann. Das sich im Rückführkanal sammelnde Erntegut neigt dort zu Verstopfungen. Zudem kann eine pulsierende Einspeisung, d.h. Mitnahme größerer, gesammelter Erntegutmengen aus dem Rückführkanal in den Förderkanal, Schoppern und Verstopfungen auch im Frischgut-Förderkanal selbst bewirken. Staut sich das aus der Gutkammer austretende Erntegut im Bereich der Bindenetzzuführung einer Ballenpresse, kann auch die Netzzuführung zum Binden des an sich fertig gewickelten Ballens behindert werden.

Der Erfindung liegt die Aufgabe zugrunde, eine verbesserte Erntemaschine der genannten Art zu schaffen, die Nachteile des Standes der Technik vermeidet und Letzteren in vorteilhafter Weise weiterbildet. Insbesondere soll eine möglichst vollständige Rückführung des aus der Gutsammelkammer austretenden Ernteguts ohne Streuverluste auf den Boden erreicht werden, ohne Gefahr zu laufen, dass sich das rückzuführende Erntegut .staut, eine mögliche Netzzuführung behindert oder es beim Zufördern des frischen Ernteguts im Förderkanal zu Schoppern und Verstopfungen kommt.

Erfindungsgemäß wird diese Aufgabe durch eine Erntemaschine gemäß Anspruch 1 gelöst. Bevorzugte Ausgestaltungen der Erfindung sind Gegenstand der abhängigen Ansprüche.

Erfindungsgemäß ist ein Rückförderer zum Zurückfördern von Erntegut aus dem Rückführkanal in den Förderkanal für Frischgut vorgesehen. Ein solcher antreibbarer Rückförderer trägt sich im Rückführkanal sammelndes Erntegut ab, verhindert dort Staubildung und speist das rückgeführte Erntegut zwangsweise, gesteuert und gezielt zurück in den Frischgutstrom bzw. die Gutsammelkammer zurück.

Der genannte Rückförderer kann vorteilhafterweise kontinuierlich arbeitend ausgebildet oder kontinuierlich antreibbar sein, um laufend Erntegut aus dem Rückführkanal abzufördern, so dass dort erst gar keine Staubildung auftreten kann. Alternativ wäre auch ein zyklisch arbeitender oder bei Bedarf zuschaltbarer Betrieb des Rückförderers möglich, der beispielsweise sensorgesteuert dann angeschaltet werden könnte, wenn sich im Rückführkanal eine bestimmte Erntegutmenge angesammelt hat.

Erfindungsgemäß umfasst der genannte Rückförderer einen Rückförderrotor. Der Rückförderer kann grundsätzlich einen eigenen Antrieb besitzen, wird vorteilhafterweise jedoch von einem anderen, an sich bereits vorhandenen Antriebsaggregat für das Erntegut angetrieben. Insbesondere kann der Rückförderrotor von einer der Starterwalzen her bzw. einem Starterwalzenantriebsstrang her angetrieben werden, welche Starterwalzen sich bekanntermaßen am Eingangsbereich der Gutsammelkammer befinden können, um das Erntegut in der Gutsammelkammer in der gewünschten Weise zu transportieren, insbesondere zu Ballen zu formen bzw. den hierfür vorgesehenen Ballenkammerriemen zuzuführen.

Der Rückförderer kann in vorteilhafter Weiterbildung der Erfindung im Ausgangsbereich des Rückführkanals angeordnet sein, um das im Rückführkanal angesammelte Erntegut zwangsweise aus dem Rückführkanal herauszufördern. Insbesondere kann der genannte Rückförderer in einem Mündungsbereich des Rückführkanals in den Frischgut-Förderkanal hinein und/oder in den Eingangsbereich in die Gutsammelkammer hinein angeordnet sein, so dass der Rückförderer das rückgeführte Erntegut in den Förderkanal bzw. den Eingangsbereich in die Gutsammelkammer hinein fördert.

Grundsätzlich kann der Rückförderkanal an verschiedenen Abschnitten des Förderkanals, durch den der Förderrotor das frische Erntegut in die Gutsammelkammer hinein fördert, angebunden sein bzw. münden. In vorteilhafter Weiterbildung der Erfindung mündet der Rückführkanal dabei stromab des Förderrotors in den genannten Förderkanal, insbesondere nahe dem Mündungsbereich des Förderkanals in die Gutsammelkammer. Hierdurch kann das rückgeführte Erntegut von dem frischen Erntegut, das vom stromauf angeordneten Förderrotor durch den Förderkanal geschoben wird, mitgenommen werden, so dass sich eine Staugefahr an der Einspeisestelle weiter reduziert.

Ist dem Förderrotor bzw. dem Förderkanal ein Schneidwerk zugeordnet, das in an sich bekannter Weise in den Förderkanal hinein ragende bzw. auf den Förderrotor zu ragende Schneidmesser umfassen kann, vorgesehen, kann der Rückführkanal vorteilhafterweise stromab des genannten Schneidwerks münden, so dass das rückgeführte Erntegut nicht nochmals zerschnitten wird.

Der Förderrotor kann insbesondere als Überkopfförderer ausgebildet sein, wobei der genannte Rückführkanal von oben her in den über den Förderrotor geführten Förderkanal münden kann.

Sind am Eingangsbereich der Gutsammelkammer Starterwalzen vorgesehen, wie dies bei Ballenpressen der Fall sein kann, kann der dem Rückführkanal zugeordnete Rückförderer vorteilhafterweise unterhalb der über dem Eingangsbereich in die Gutsammelkammer angeordneten Starterwalzen angeordnet sein, zumindest nicht höher als die unterste dieser am oberen Randbereich des Eingangs in die Gutsammelkammer angeordneten Starterwalze. Insbesondere kann der Rückförderer neben der untersten dieser über dem Eingang in die Gutsammelkammer angeordneten Starterwalze angeordnet sein, vorzugsweise leicht unterhalb dieser genannten untersten Starterwalze.

Der Rückführkanal kann in Weiterbildung der Erfindung auf der der Gutsammelkammer abgewandten Seite der genannten Starterwalzen verlaufen, wobei der genannte Rückführkanal von einer Rückführkanalwand begrenzt sein kann, die gegenüberliegend den genannten Starterwalzen angeordnet sein kann.

Vorteilhafterweise besitzt der genannte Rückführkanal einen abschüssigen, nach unten gerichteten Verlauf, der von oben her auf den Rückförderer zuführt, wobei der genannte Rückführkanal einen näherungsweise senkrechten oder nur leicht spitzwinklig zur Vertikalen, beispielsweise unter einem spitzen Winkel von weniger als 30° zur Vertikalen, nach unten führenden Verlauf besitzen kann.

Die Erfindung wird nachfolgend anhand eines bevorzugten Ausführungsbeispiels und zugehöriger Zeichnungen näher erläutert. In den Zeichnungen zeigen:

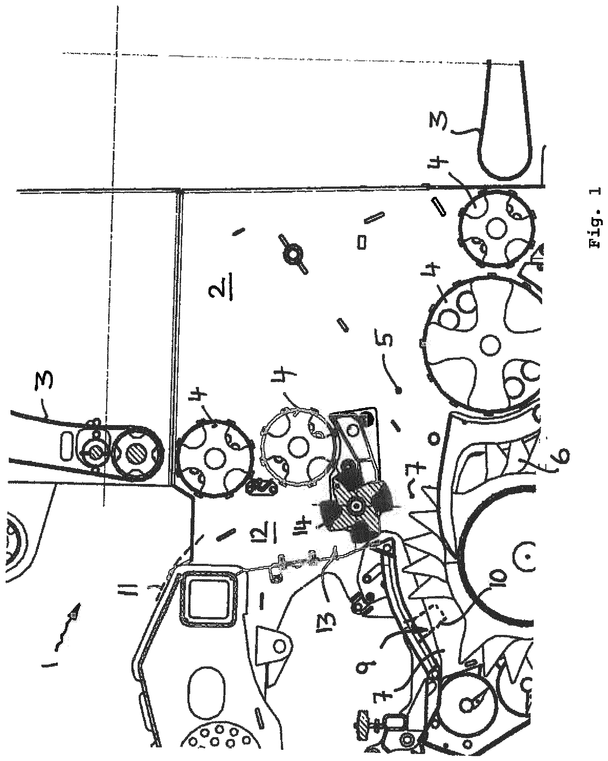

- Fig. 1:: eine ausschnittsweise Seitenansicht einer Erntemaschine in Form einer Ballenpresse, die den Eingangsbereich der Ballenformkammer, den von einem Förderrotor beschickten Förderkanal in die Ballenkammer sowie den Rückführkanal und den diesem zugeordneten Rückförderer zum Rückfördern von aus der Ballenkammer ausgetretenem Erntegut zeigt.

Wie Fig. 1 zeigt, kann die Erntemaschine als Ballenpresse 1 ausgebildet sein, die eine als Ballenkammer ausgebildete Gutsammelkammer 2 aufweist, in der halm- und/oder blattförmiges Erntegut zu Ballen gewickelt bzw. gepresst werden kann. Die genannte Gutsammelkammer 2, die die Ballenkammer bildet, kann in an sich bekannter Weise von umlaufend antreibbaren Riemen 3 eingefasst sein, die über mehrere Umlenkrollen, die am Umfang der Gutsammelkammer 2 verteilt angeordnet sind, geführt werden. Im Eingangsbereich kann die genannte Gutsammelkammer 2 von sog. Starterwalzen 4 eingefasst sein, die neben- bzw. übereinander angeordnet einerseits an die umlaufenden Riemen 3 angrenzen und andererseits den Einlass 5 in die Gutsammelkammer 2 einfassen, durch den Erntegut in die Gutsammelkammer 2 gefördert wird.

Das Erntegut kann in an sich bekannter Weise vom Boden aufgenommen werden, wofür die Ballenpresse eine Aufnahmevorrichtung beispielsweise in Form einer Pickup mit einer rotierenden Stachelwalze aufweisen kann, die in an sich bekannter Weise beispielsweise durch Stützräder oder auch sensorgesteuert über den Boden geführt wird. Das vom Boden aufgenommene Erntegut wird von einem Förderrotor 6 - vgl. Fig. 1 - durch einen Förderkanal 7 hindurch weiter gefördert und gelangt durch den genannten Förderkanal 7 in den Einlass 5 bzw. in die Gutsammelkammer 2 hinein. Wie Fig. 1 zeigt, kann der Förderrotor 6 als Überkopfförderer ausgebildet sein, der das Erntegut über Kopf durch den genannten Förderkanal 7 fördert, welcher oberhalb des Förderrotors 6 angeordnet ist bzw. über den Förderrotor 6 hinweg führt. Der Förderkanal 7 kann hierbei durch eine Förderkanalwand 8 begrenzt sein, die beabstandet zum Förderrotor 6 angeordnet ist und leicht bogenförmig gekrümmt der Umlaufbahn des Förderrotors 6 folgen kann. Ist der Förderrotor 6 als Überkopfförderer ausgebildet, kann die genannte Förderkanalwand 8 eine Förderkanaldecke bilden, die sich über Kopf über dem Förderrotor 6 erstreckt, vgl. Fig. 1. Der genannte Förderkanal 7 führt näherungsweise liegend auf den Einlass 5 in die Gutsammelkammer 2 zu und mündet sozusagen in den genannten Einlass 5.

Dem Förderrotor 6 kann ein Schneidwerk 9 zugeordnet sein, das in den Förderkanal 7 hinein ragende bzw. auf den Förderrotor 6 zu ragende Schneidmesser aufweisen kann, wie dies in Fig. 1 die strichlierte Darstellung zeigt. Die genannten Schneidmesser 10 können insbesondere von oben her in den Förderkanal 7 hinein hängen.

An den zuvor genannten Starterwalzen 4 kann bereits in die Gutsammelkammer 2 hinein gefördertes Erntegut wieder aus der Gutsammelkammer 2 austreten, da die Starterwalzen 4 üblicherweise einen gewissen Spalt zu den Riemen 3 hin besitzen und auch zwischen sich einen solchen Spalt begrenzen, beispielsweise auch um die Zuführung eines Wickelnetzes oder einer Wickelfolie oder dergleichen in die Ballenkammer hinein zu erlauben. In Fig. 1 deutet die Bezugsziffer 11 die Wickelnetz- bzw. -folienzuführung an.

Auf der Außenseite der genannten Starterwalzen 4, d.h. der der Gutsammelkammer 2 abgewandten Seite der genannten Starterwalzen 4 ist zum Aufsammeln bzw. Auffangen dieses Ernteguts, das unbeabsichtigterweise aus der Gutsammelkammer 2 herausfällt, ein Rückführkanal 12 vorgesehen. Der Rückführkanal 12 bildet eine Sammelkammer für dieses herausfallende Erntegut und führt außerhalb der Gutsammelkammer 2 abschüssig nach unten auf den zuvor beschriebenen Förderkanal 7 zu. Vorteilhafterweise kann der genannte Rückführkanal 12 stromab des Förderrotors 6 und auch stromab des optional vorgesehenen Schneidwerks 9 in den Förderkanal 11 münden, insbesondere unmittelbar im Übergangsbereich des Förderkanals 11 in den Einlass 5 in die Gutsammelkammer 2 hinein.

Im Mündungsbereich des genannten Rückführkanals 12 in den Förderkanal 7 hinein ist der Rückförderer 13 vorgesehen, der einen antreibbaren Rückförderrotor 14 aufweist, um das durch den Rückführkanal 12 rückgeführte Erntegut zwangsweise in den Frischgutstrom einzuspeisen, der vom Förderrotor 6 durch den Förderkanal 7 hindurch in den Einlass 5 bzw. die Gutsammelkammer 2 gefördert wird. Hierdurch wird das rückgeführte Erntegut aus dem Rückführkanal 12 zusammen mit dem Frischgut in die Gutsammelkammer 2 zurückgeführt.

Der genannte Rückförderrotor 14 kann vorteilhafterweise von einer der Starterwalzen 4 her bzw. einem Starterwalzenantriebsstrang her antreibbar sein.

Der Rückförderrotor 14 kann gegenläufig zum Förderrotor 6 umlaufend angetrieben werden, so dass das rückgeführte Erntegut zwangsweise zwischen dem Rückförderrotor 14 und dem Förderrotor 6 hindurch gefördert wird.

## Patentansprüche

1. Erntemaschine, insbesondere in Form einer Ballenpresse, mit einem als Überkopfförderer ausgebildeten Förderrotor (6) zum Fördern von Erntegut durch einen Förderkanal (7) in eine Gutsammelkammer (2), sowie einem Rückführkanal (12) zum Rückführen von aus der Gutsammelkammer (2) austretendem Erntegut zurück in den Förderkanal (7), wobei ein Rückförderer (13) zum Zurückfördern von Erntegut aus dem Rückführkanal (12) in den Förderkanal vorgesehen ist, **dadurch gekennzeichnet, dass** der Rückführkanal (12) von oben her in den über den Förderrotor (6) geführten Förderkanal (7) mündet und der Rückförderer (13) einen umlaufend antreibbaren Rückförderrotor (14) aufweist, der das Erntegut aus dem Rückführkanal (12) in den Förderkanal (7) hinein fördert.

2. Erntemaschine nach dem vorhergehenden Anspruch, wobei der Rückförderer (13) im Ausgangsbereich des Rückführkanals (12) vorgesehen ist.

3. Erntemaschine nach einem der vorhergehenden Ansprüche, wobei der Rückförderer (13) im Übergangsbereich des Rückführkanals (12) in den Förderkanal (7) angeordnet ist.

4. Erntemaschine nach einem der vorhergehenden Ansprüche, wobei der Rückführkanal (12) stromab des Förderrotors (6) in den Förderkanal (7) und/oder den Mündungsbereich des Förderkanals (7) in die Gutsammelkammer (2) mündet.

5. Erntemaschine nach einem der vorhergehenden Ansprüche, wobei der Rückführkanal (12) stromab von in den Förderkanal (7) hinein ragenden Schneidmessern (10) eines Schneidwerks (9) in den Förderkanal (7) mündet.

6. Erntemaschine nach einem der vorhergehenden Ansprüche, wobei der Rückführkanal (12) sich von der Austrittsstelle des Ernteguts aus der Gutsammelkammer (2) abschüssig nach unten auf den Rückförderer (13) zu erstreckt, insbesondere näherungsweise vertikal nach unten zum Rückförderer (13) führt.

7. Erntemaschine nach einem der vorhergehenden Ansprüche, wobei sich der Förderkanal (7) und der Rückführkanal (12) zueinander zumindest näherungsweise senkrecht erstrecken.

8. Erntemaschine nach einem der vorhergehenden Ansprüche, wobei der Rückförderrotor (14) eine liegend ausgerichtete Rotordrehachse besitzt.

9. Erntemaschine nach einem der vorhergehenden Ansprüche, wobei der Rückförderer (13) von einer Starterwalze (4) her und/oder einem Starterwalzenantriebsstrang her antreibbar ist.

## Claims

1. Harvesting machine, in particular in the form of a baling press, with a feed rotor (6) formed as an overhead conveyor for the conveying of harvested material through a conveying channel (7) into a material collecting chamber (2), as well as a return channel (12) for the returning harvested material exiting from the material collection chamber (2) back into the conveying channel (7), wherein a return conveyor (13) is provided for the returning of the harvested material out of the return channel (12) into the conveyor channel, **characterized in that** the return channel (12) opens from above into the conveying channel (7) led over the feed rotor (6) and the return conveyor (13) comprises a return feed rotor (14) which can be driven in a circumferentially-rotating manner, which feeds the harvested material out of the return channel (12) and into the conveying channel (7).

2. Harvesting machine according to the preceding claim, wherein the return conveyor (13) is provided in the outflow area of the return channel (12).

3. Harvesting machine according to one of the preceding claims, wherein the return conveyor (13) is arranged in the transition zone of the return channel (12) into the conveying channel (7).

4. Harvesting machine according to one of the preceding claims, wherein the return channel (12) opens downstream of the feed rotor (6) into the conveying channel (7) and/or the mouth area of the conveying channel (7) into the material collection chamber (2).

5. Harvesting machine according to one of the preceding claims, wherein the return channel (12) opens into the conveying channel (7) downstream of cutting blades (10) of a cutting mechanism (9) projecting into the conveying channel (7).

6. Harvesting machine according to one of the preceding claims, wherein the return channel (12) extends from the outflow area of the harvested material out of the material collection chamber (2) sloping downwards towards the return conveyor (13), in particular leads approximately vertically downward to the return conveyor (13).

7. Harvesting machine according to one of the preceding claims, wherein the conveying channel (7) and the return channel (12) extend at least approximately perpendicularly to each other.

8. Harvesting machine according to one of the preceding claims, wherein the return feed rotor (14) has a horizontally-oriented rotary axis of the rotor.

9. Harvesting machine according to one of the preceding claims, wherein the return conveyor (13) can be driven from a starter roller (4) and/or a starter-roller drive train.

## Revendications

1. Moissonneuse, notamment sous forme d'une presse à balles, comprenant un ameneur rotatif (6) réalisé en tant que convoyeur au-dessus de la tête, destiné à transporter un produit récolté à travers un canal d'acheminement (7) pour l'amener dans une chambre collectrice de produit (2), et comprenant un canal de retour (12) destiné à ramener en retour dans le canal d'acheminement (7) le produit récolté sortant de la chambre collectrice de produit (2), un convoyeur de retour (13) destiné à ramener en retour dans le canal d'acheminement (7) le produit récolté provenant du canal de retour (12) étant ménagé, **caractérisée en ce que** le canal de retour (12) aboutit depuis le haut dans le canal d'acheminement (7) mené au-dessus de l'ameneur rotatif (6) et **en ce que** le convoyeur de retour (13) présente un ameneur rotatif de retour (14) entraînable en continu, lequel achemine dans le canal d'acheminement (7) le produit récolté en provenance du canal de retour (12).

2. Moissonneuse selon la revendication précédente, le convoyeur de retour (13) étant ménagé dans la partie de sortie du canal de retour (12).

3. Moissonneuse selon l'une quelconque des revendications précédentes, le convoyeur de retour (13) étant disposé dans la zone de transition du canal de retour (12) vers le canal d'acheminement (7).

4. Moissonneuse selon l'une quelconque des revendications précédentes, le canal de retour (12), en aval de l'ameneur rotatif (6), débouchant dans le canal d'acheminement (7) et/ou dans la chambre collectrice de produit (2) dans la partie d'embouchure du canal d'acheminement (7).

5. Moissonneuse selon l'une quelconque des revendications précédentes, le canal de retour (12), en aval de couteaux (10) d'un dispositif de coupe (9), faisant saillie dans le canal d'acheminement (7), débouchant dans le canal d'acheminement (7).

6. Moissonneuse selon l'une quelconque des revendications précédentes, le canal de retour (12) s'étendant, du point de sortie du produit récolté sortant de la chambre collectrice de produit (2), en pente vers le bas en direction du convoyeur de retour (13), notamment en ce qu'il va approximativement verticalement vers le bas en direction du convoyeur de retour (13).

7. Moissonneuse selon l'une quelconque des revendications précédentes, le canal d'acheminement (7) et le canal de retour (12) s'étendant au moins approximativement de manière verticale l'un par rapport à l'autre.

8. Moissonneuse selon l'une quelconque des revendications précédentes, l'ameneur rotatif de retour (14) possédant un axe de rotation de rotor orienté horizontalement.

9. Moissonneuse selon l'une quelconque des revendications précédentes, l'ameneur rotatif de retour (13) étant entraînable depuis un rouleau de démarrage (4) et/ou depuis un brin d'entraînement de rouleau de démarrage.
